(19) Europäisches Patentamt
European Patent Office
Office européen des brevets

(11) **EP 2 000 336 A1**

(12) **EUROPEAN PATENT APPLICATION**

(43) Date of publication:
**10.12.2008 Bulletin 2008/50**

(51) Int Cl.:
*B60G 17/0185* [(2006.01)]   *B60G 17/056* [(2006.01)]
*B60G 21/073* [(2006.01)]   *B60G 21/10* [(2006.01)]
*F15B 13/04* [(2006.01)]   *B60G 17/033* [(2006.01)]
*B60G 17/016* [(2006.01)]

(21) Application number: **07109820.6**

(22) Date of filing: **07.06.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Nederlandse Organisatie voor
Toegepast-
Natuurwetenschappelijk Onderzoek TNO
2628 VK Delft (NL)**

(72) Inventors:
• **van der Knaap, Albertus Clemens Maria
5706 KX Helmond (NL)**
• **Tinsel, Raymond Bernardus Gerhardus
5623 MV Eindhoven (NL)**
• **Wouters, Ronny Maria Theophilus
6367 JA Ubachsberg (NL)**

(74) Representative: **van Loon, C.J.J. et al
Vereenigde
Johan de Wittlaan 7
2517 JR Den Haag (NL)**

(54) **Suspension system**

(57) Suspension system for a vehicle, comprising a hydraulic pump (10) and at least two hydraulic piston cylinder units (1) which serve as spring damper/actuator modules and which each comprise a larger, first cylinder chamber (3a) and a smaller, second cylinder chamber (3b). A roll control system comprises a 4/3 valve (6) provided with hydraulic control ports (c), having two first switching ports (P,T) connected to both sides of the hydraulic pump, and two second switching ports (A,B) connected to both first cylinder chambers (3a). The switching ports are mutually connectable by means of a movable connection member which can take a rest position and which can be brought out of its rest position under control of a computer system of the vehicle. The hydraulic control ports (c) of the 4/3 valve are each connected to second switching ports (A,B) for actuating the movable connection member. Further the movable connection member is connected to a double acting electromagnetic actuation which is arranged to move the movable connection member, under control of an electric control current, from its rest position into the direction of the one or the other extreme position.

FIG. 2

EP 2 000 336 A1

**Description**

Field of the invention

The invention refers to the suspension system for a vehicle The invention especially refers to a suspension system for a vehicle, comprising a hydraulic pump and at least two hydraulic piston cylinder units which serve as spring damper/actuator modules and which each comprise a larger, first cylinder chamber and a smaller, second cylinder chamber and which are connected to a roll control system which comprises a 4/3 valve provided with hydraulic control ports, having two first switching ports connected to both sides of the hydraulic pump, and two second switching ports communicatively connected to both first (larger) cylinder chambers, which switching ports are mutually connectable by means of a movable connection member which can take a rest position and, under dynamic circumstances of the vehicle, can be brought out of its rest position, wherein in the rest position of the connection member the first and the second switching ports are all interconnected with each other, in one extreme position the first ones are interconnected with the corresponding second switching ports and in the other extreme position the first ones are interconnected with the mutually substituted second switching ports.

Background of the invention

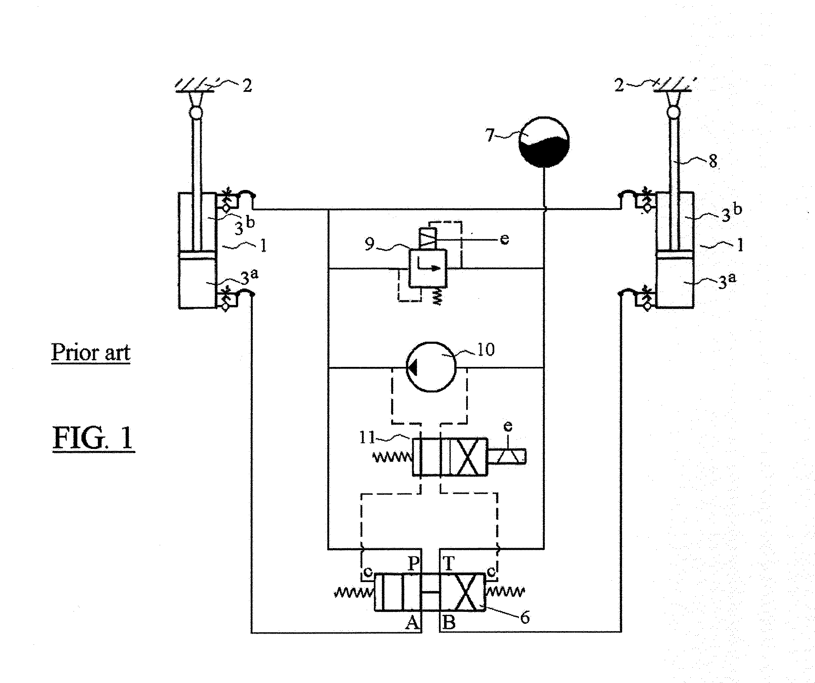

For the benefit of suspension comfort and driving behaviour of vehicles, e.g. cars, hydraulic dampers may be used. Such dampers offer possibilities for integration with active roll stabilization. Roll stabilization can be reached by providing an anti-roll moment, counteracting rotation around the length axis of the vehicle when taking a bend.
Such a system is e.g. known from an earlier patent application filed by the applicant, with the number EP060761236.
EP060761236 discloses a suspension system for a vehicle comprising two hydraulic piston-cylinder units serving as suspension/actuator modules each comprising a first cylinder chamber and a second cylinder chamber. In both cylinders the cylinder chambers have different volumes ("large chamber" and "small chamber" respectively) owing to the volume which is occupied by the piston rod. The cylinder chambers of both piston-cylinder units are connected to an electro-hydraulic roll control system, including a 4/3 valve controllable via hydraulic control ports, having two first switching ports (P,T) and two second switching ports (A,B) which are mutually connectable (interconnectible) via a movable connection member (e.g. a "slider"). That connection member normally takes a central (rest) position when the vehicle is in rest or drives straight on. By, amongst others, dynamical circumstances of the vehicle, the connection member can, via the hydraulic control ports, be brought out of its rest position. The hydraulic control ports of the 4/3 valve are actuated via an electrically actuated 4/2 valve. The pressure of the electrically driven hydraulic pump (P) is controlled by an electrical pressure control valve. Further, the hydraulic circuit is connected to a gas buffer.
Figure 1 shows a preferred embodiment from figure 2 of EP060761236. The prior art system shown in figure 1 comprises two hydraulic piston-cylinder units 1, serving as suspension/actuator modules for vehicle 2, each having a first (large) cylinder chamber 3a and a second (smaller) cylinder chamber 3b and a piston rod 8 connected to the vehicle. The terms "large" and "small" cylinder chamber originate from the fact that, due to the presence of the piston rod, the piston surface in the second ("small") chamber is smaller than the piston surface area in the first ("large") chamber. The piston rod, moreover, occupies part of the volume of the second ("small") chamber. Obviously, the volume of both chambers is dependent on the position of the piston and, when the piston is in a far down position, the volume of the upper, "small" chamber may be larger than the volume of the below, "large" chamber.
For certain reasons, not to be explained here, it is preferred in prior art systems (sometimes indicated as VDS/Tech) that the piston surface at the side of the "large" chambers is mainly twice as large as the piston surface of the "small" chambers, which can be reached by using a piston rod having a thickness which is such that the surface area of its cross-section is equal to the (remaining) surface area of the piston at the same side.
The surface area of the piston at the other (under)side is twice as large then. The surface area ratio of the pistons, however, is not of substantial importance for the present invention.
The prior art system further comprises a 4/3 valve 6 having two first switching ports P and T and two second switching ports A and B, which mutually can be interconnected in three ways: in the rest position ("H") P, T, A and B are all interconnected, in one extreme position ("II") P is interconnected with A and T with B, and in the other extreme position ("X") P is interconnected with B and T with A. The 4/3 valve is actuated hydraulically via control ports c which are connected with a pump 11 via an electrically actuatable (4/2) valve 11.
Finally, the system is provided with an electrically actuatable pressure control valve 9, hereinafter also called roll valve. The control or actuation of this pressure control valve 9, as well as the control e of the remaining electrically controlled or actuated components occurs from a vehicle computer system not to be discussed here further.
The prior art concept has the following problems which will be discussed hereinafter, with reference to figure 1.

1.1 Unstable rest position 4/3 valve

For switching the 4/3 valve from the rest position to one of the extreme positions in principle only a small pressure difference is available. To be precise, this is the pressure drop over the roll valve (the pressure control valve 9). This pressure drop could be raised by increasing the pump volume flow and/or the resistance of the roll valve (e.g. by raising its setpoint by means of the vehicle computer), however, this is undesirable from a viewpoint of energy consumption, control complexity and driving comfort (in fact a high resistance of the anti-roll valve is only permitted during taking a fast bend; in that case a human in less sensitive for driving comfort). Moreover, the pressure drop over the roll valve is not only influenced by the resistance of the valve, but also by the resistance of the parallel 4/3 valve 6, especially its resistance of P (pump side) to T (tank side, to which the gas accumulator 7 has been connected).

In the specific switching situation which occurs normally at a changeover of the vehicle from driving straight on to a bend, the 4/3 valve is in the rest position which is characterized by an "H"-interconnection. In this situation the resistance from P to T is very low. Thus, when the resistance of the roll valve 9 would be raised much in favour of the switching operation, even then the pump would have to generate a relative large volume flow in order to realize a significant pressure drop over the roll valve (the greater part, after all, will flow unhindered from P to T via the central position of the 4/3 valve 6). To solve this problem the 4/3 valve has to provided with a relatively large pressure amplification, to be dimensioned by the size of the surface of the piston to which the actuation pressure c is exerted to the slide ("Druckmeldefläche"), whether or not in combination with slack reset springs (having a low spring rigidity or spring constant).

The disadvantage of this all is that the slide of the 4/3 valve responds to the slightest pressure pulse originating from suspension movements of the dampers (since no differentiation can made between a volume flow over the roll valve originating from the pump or from a damper movement). When driving straight on (the situation in which a human is the most sensitive for driving comfort) this could possibly lead to discontinuities in the damper behaviour (when driving over road bumps). Further much unnecessary switching of the 4/3 valve could cause acoustical and lifetime problems.

1.2 Fail-safe behaviour

The main condition for a good "fail-safe" behaviour of an active suspension system is that when the system fails, no unsafe situation will occur w.r.t. the operation of the vehicle. In the case of an anti-roll system driving through a bend can be considered the most critical situation (wherein a high centrifugal force occurs → high bend speed in combination with a relative small bend radius). When in this situation a system would fail, e.g. due to failure of the pump and/or the electromagnetic actuation of control valves, a predictable response of the vehicle is desirable: in such a situation the driver must not surprised by the control system, he/she, after all, will need all concentration to keep the vehicle in the right coarse.

When taking a bend the vehicle will be kept free of rolling if the active suspension system operates well. However, in the unlikely event of system failure a controlled, well damped roll movement is the most desirable response of the vehicle body (coach work). On the one hand, to inform the driver in a "haptonomic" way that something is wrong and a more steady driving behaviour is thus advisable then and, on the other hand, to guarantee the steerability of the vehicle in such precarious situation. After all, fast "turning over its side" of the vehicle would cause a serious disturbance of the steerability and road-holding of the vehicle.

Unfortunately, this is the case with the state of the art. There are a number of reasons for this. In the system according to figure 1 the most critical situation is the case that the 4/2 valve 11 is in the "X" position (figure 1 shows the valve 11 in the - de-energized - rest position "II"). In this case ("X" position) the electromagnet will push the 4/2 valve against its suspension force. Due to the pressure drop over the roll valve 9 related to the pump volume flow the 4/3 valve 6 will also be in its "X" position. Now, via the dampers, an anti-roll moment is realized in the other direction: after all, the large chamber 3a of the left damper 1 is connected to the gas accumulator 7 and the large chamber 3a of the right damper 1 to the high pressure side of the pump 10.

When the electromagnetic force of the 4/2 valve cuts off (e.g. by current failure) this valve will return into its rest position, corresponding with the "II" position. Consequently, the 4/3 valve will (as long as the pump keeps running) be switched suddenly to the opposite position (the "II" position in this case) with as the worst result that the previously stabilizing anti-roll moment, which kept the car upright during taking the bend, will invert its rotation direction and spontaneously change into a destabilizing active pro roll moment. In other words, the vehicle body will be jumped outside with a smack. It will be obvious that this behaviour is extremely dangerous and undesirable.

In the mentioned case stopping the pump will neither solve the problem. After all, cutting off of the control pressure (e.g. by pump failure, thus another fail condition) at the 4/3 valve always will cause the 4/3 valve to return into its rest position abruptly. In that case thus the "H" position will be taken which is characterized by a very low resistance from P to T. Consequently, the anti-roll moment supplied by the dampers will cut off nearly instantaneously, resulting in all kinds of adverse consequences w.r.t. the controllability of the vehicle.

1.3 Cavitation of the damper chambers

Cavitation in fluids occurs when the system pressure descends under atmospheric pressure (towards vacuum). The "gas bubbles" always dissolved in the fluid, will implode at this moment, resulting in noise which is bad for the acoustics. Besides, a frequent repetition of this process may cause pit formation in the steel damper housings ("erosion"). This is unfavourable for the life of the system. For that reason cavitation in hydraulic systems always has to be prevented (or at least the chance to be reduced).

Because in practice the dampers 1 are located at a relatively large distant from the gas accumulator 7, there is an increased risk for cavitation in case of fast piston movements which typically occur when driving on a bad road surface. Especially the movements which cause fast enlargements of the large chamber (pulling out movements of the damper) are considered most critical. In this case the damper chamber has to suck on its oil need (related to the volume enlargement) by means of an underpressure relative to the pressure of the gas accumulator. The more resistance in this section (caused by pipes and valves), the more underpressure will be needed to be able to fill the damper chamber with oil fast enough. The faster the damper moves, the higher the risk for cavitation. In principle the problem may be solved (or reduced) by applying a high filling pressure of the gas accumulator. However, for energy management, functional and cost considerations, this is undesirable. Moreover, due to this measure the pressure in the dampers increases to such an extend that the damper sealings and/or remaining components could collapse. Besides, increased damper pressure will force the sealing of the damper to be more tightened in order to prevent outward leakage. This will cause higher friction, which is unfavourable for the driving comfort ("harshness").

If a fast piston movement occurs owing to driving over road bumps during taking a bend, an increased risk for cavitation exists. After all, the resistance of the section between the damper chambers (connected to the high pressure side of the pump) and the gas accumulator will deliberately be raised to realize the anti-roll moment. Because the roll valve 9 is pinched and the 4/3 valve 6 is in one of its extreme positions. Now the available pump volume flow is the only medium which can provide in the oil need of the increasing damper chambers. However, from energetical, weight and cost considerations the pump must not be too large. Therefore it cannot be excluded that during fast damper movements a volume flow need from the damper chamber will be generated which exceeds the capacity (read available volume flow) of the pump. Because in this specific case the connection to the gas accumulator is almost closed, cavitation in the hydraulic system is inevitable.

1.4 Failure behaviour dampers

Further it applies that in the case mentioned above the volume flow over the roll valve 9 induced by the pump will temporarily become "zero" (or even negative) which will stop the controllability of the system. Dependent on the effective resistance characteristics (which preferably are degressive, like those applicable in e.g. a proportional pressure control valve) this may cause an abrupt disturbance in the magnitude of the damper force and consequently the anti-roll moment. A human may experience this as discomfort. This effect is amplified by the relatively stiff pipe system provided between the dampers and the central valve system.

Also when driving straight on, if the pump does not run and the roll valve is opened completely, the contribution of the resistance of the pipes and control valves may influence adversely the quality and stability of the damper forces caused by suspension movements. However, if those forces are mainly caused by damper valves at the inlet gates of the chambers, the influence of the pipes to the damper forces will be less noticeable. However, because the resistance of the pipes and valve system cannot be made negligibly small (due to package requirements and costs) this still has to be taken into account. After all, for a good driving comfort the sum of the resistance of the damper valve and of the hydraulic system has to be made sufficiently low. Especially during high frequent bumps of the dampers (typically 12 Hz, related to the resonant frequency of the wheel) the influence of the pipes en the valve system may be experienced as disturbing, simply because the relatively long oil column (e.g. between damper chamber and gas accumulator) cannot be pumped fast enough back and forth.

Summary of the invention

The present invention aims to meet several drawbacks or problems respectively discussed in the foregoing:

- Instability of the rest position of the 4/3 valve.

- Unsafe fail-safe behaviour.

- Risk for cavitation.

- Critical failure behaviour of the damper forces.

According to the invention, in the suspension system of the type indicated under "Field of the invention", it is preferably provided

- that the hydraulic control ports of the 4/3 valve for controlling the movable connection member each are connected communicatively with second switching ports; and further
- that the movable connection member is connected to a double acting electromagnetic actuation which is arranged to move the movable connection member, under influence of an electric control current, from its rest position into the direction of the one or the other extreme position.

These measures preferred by the invention together provide a solution for the relative instability of the movable connection member of the 4/3 valve in its rest position, as discussed in the foregoing, which will be explained more in detail hereinafter.

The hydraulic actuation of the movable connection member ("the slide"), via the control ports, occurs, as is proposed here, from the side AB, the side of the 4/3 valve connected to the large damper chambers; this contrary to the prior art system in which (see Figure 1) the connection member is actuated from the side PT, however, via a switchable 4/2 valve which determines (electrically) the pressure direction to the slide of the 4/3 valve. In the configuration proposed now, this 4/2 valve is omitted. Instead, an extra, double acting ("pull/push") electromagnetic actuation of the 4/3 valve is used, intended to initiate - in driving dynamically situations - the movement of the slide from its rest position (and, in addition, to indicate the motion direction), i.e. to get the slide going towards the right side. As soon as the slide movement has been initiated (the slide is pushed from its "H" position, in which the pump cannot build up any substantial pressure), soon the hydraulic actuation itself will support and take over respectively the initiated movement and push the slide into one of its extreme positions. Because the hydraulic actuation thus is brought up largely by the pump, a relatively small electromagnet will suffice (favourable for package, weight and costs). If the hydraulic actuation would not be applied, then an electromagnet having a substantially larger power would be needed. The valve itself (the hydraulic slide) has to be made rather large in order to minimize the flow resistance.

Both the electromagnetic and the hydraulic actuation work qua direction against the force of the relevant reset spring or springs. Those springs keep the slide in its central rest position during non-dynamical driving conditions.

In the rest position no resulting pretension force exists. The rigidity characteristic of the spring packet (force as function of the compression) thus provides the stability of this movement around the centre. A small pressure disturbance at the slide always will cause a small movement. The higher the spring rigidity, the smaller the corresponding movement is. Because in the configuration presented here (contrary to the state of the art) the electromagnet is mainly responsible for pushing (or knocking) away the slide out of its rest position, the spring rigidity of the springs may be increased considerably, which will improve the stability.

As a further measure to improve the stability of the rest position it is also possible now - as the movement of the slide to the left or to the right is initiated by the electromagnet - to reduce the pressure amplification (determined by the dimensions of the "Druckmeldeflächen"), which decreases the sensitivity of the valve for pressure bumps originating from fast damper movements when driving over road bumps.

The measures preferred by the invention - connecting the control ports to the AB side of the 4/3 valve and providing an electromagnetic movement initiator - will result in an improved fail-safe behaviour as well, as will be explained below.

By cancelling the 4/2 valve which switches the direction of the pressure actuation at the 4/3 valve in the prior art configuration, the fail-safe behaviour is improved considerably. Further it applies that at loss of the electromagnetic actuation (e.g. by power failure) when taking a bend, the 4/3 valve will maintain its extreme position due to the hydraulic actuation, thus not returning suddenly into the central rest position. If, additionally, the pump should fail, e.g. due to power failure, then in principle there is still no problem. It is true that no actively controlled moment is available any more to keep the vehicle upright, but the enclosed pressure in the damper chambers will still keep the vehicle upright. The response which follows now will be an only slowly, in a damped movement outwardly rolling (sloping) vehicle.

This is largely determined by the extent of tightness (leakage) of P (pump, pressure source) to T (tank, pressure drain) side.

However, a problem is that a pump can never be made so that it works without substantial internal leakage. Thus stopping the pump will never give the tightness properties from P to T required for fail-safe. To solve this problem, preferably a one-way valve may be provided in the suction pipe of the pump.

A further preferred measure to optimize the fail-safe behaviour is providing hydraulic buffers (or capacities) in the supply pipes to the dampers. The more oil under pressure is buffered in these "storage rooms", the more leakage from P to T may be allowed in the remaining components to realize a similar attenuated fail-safe response of the vehicle. Conversely, with equal leakage, adding the buffers will cause that, in fail-safe condition, the vehicle can be maintained longer upright.

The preferred measures according to the invention presented in the foregoing, may also play a role in reducing the risk for cavitation. In addition to providing a 4/3 valve having the control ports connected to the AB side (the side of the dampers) and having a movable connection member (the "slide") which, in driving-dynamical situations, is "knocked" out of its central rest position by means of an electromagnet, preferably a by-pass one-way valve is added to the roll valve (the pressure control valve) to combat cavitation in the pipes and components. Moreover, the cavitation will be decreased by, as discussed in the foregoing, installing hydraulic buffers in the supply pipes to the dampers.

From an earlier patent in the name of the inventor of the present application, EP1238834, it is known to install, in a similar system as the present one, damper valves in the supply pipes to the damper chambers. Those damper valves are required to achieve enough damping at the wheels during driving over a bad road, wherein among others the resonant frequency of the axle (typically about 12 Hz) is triggered. For achieving good driving comfort, the occurring damper forces during fast piston movements must not become too large. Especially the resistance of the damper valve in the supply pipe to the large chamber may be considered as restrictive because, after all, this chamber has to handle a much larger volume flow than the damper valve of the small chamber.

By installing a one-way valve in the damper pistons or by installing a one-way valve in a circuit parallel to the relevant piston, especially the damper behaviour can be improved. This preferred measure will be indicated hereinafter as measure 5.

In combination with the preferred measure 1, the improved 4/3 valve with pressure and electromagnetic actuation and with the actuation ports being connected to the AB side, measure 5 will also accomplish an improvement w.r.t. the cavitation of the small damper chamber, as well as the failure behaviour of the damper characteristics in general, because during (fast) impressions of the damper pistons less oil needs to be pumped around via the central control unit and the corresponding pipes. It is noted that EP1238834 discloses that in principle no direct hydraulic connection between the two chambers of the damper exists; according to measure 5 the measure from EP1238834 is not met because, after all, by the installation of a one-way valve in the damper pistons or in a circuit parallel to the relevant piston, a direct hydraulic connection between the two chambers of the damper exists indeed, which the resistance requirement of the damper valve of the large chamber unburdens (with all related advantages).

All mentioned preferred measures will be summarized now; next the operation and effects per measure will be discussed:

1. the control ports of the 4/3 valve are connected to the AB switching ports; the slide is connected to an electromagnetic actuation arranged to move the slide out of its rest position into the direction of the one or the other extreme position;
2. a one-way valve in the suction pipe of the pump;
3. a one-way valve parallel to the roll valve (pressure control valve);
4. hydraulic buffers (capacities) at the dampers;
5. a one-way valve in each of the damper pistons or in a circuit parallel to the relevant piston.

Measure 1:

As a result of the new pressure actuation (control ports connected to the AB side and thus to the large damper chambers) this valve will, in case of underpressure of e.g. the left damper chamber (owing to a fast suspension movement) relative to the gas accumulator, take a new position wherein a direct connection of this chamber with the gas accumulator is realized. Due to this the functionality of a one-way valve has been built in intrinsically. This feature is especially important during taking a bend. If the sucking movement of a damper connected to the high pressure side of the pump is becoming so large that the pump cannot supply the needed volume flow, the new 4/3 valve is able to jump temporarily from the one extreme position ("II" position) to the other extreme position ("X" position). In this connection, however, the remaining electromagnetic force which tries to keep the slide still in its extreme position ("II" position), is disadvantageous. To overcome this force unnecessary much underpressure relative to the gas accumulator has to be admitted. However, this problem can be overcome by measure 3.

Measure 2:

Improvement of fail-safe properties by decreasing the "leakage" between the P and T side when the pump has stopped, in other words, increasing the tightness properties from P to T.

Measure 3:

To solve the problem that the electromagnetic force will try to keep the slide of the 4/3 valve in its extreme position ("II" position), requiring much underpressure relative to the gas accumulator, measure 3 presents a solution. One-way valves ("check valves") are rather simple hydraulic components and thus do not form a considerable increase of the system complexity and corresponding costs. The working of this measure is simple: at underpressure from P to T this valve opens immediately. The remaining underpressure in the damper chamber will only be determined now by the resistance of the pipe system to the individual damper chambers. It will be important to dimension this resistance as small as possible.

Measure 4:

Decreasing the resistance of the pipes between the dampers and the valves is bound to a practical lower limit. Mainly, this limit is determined by the diameter, length and number of curves in the pipe system. A further measure may be applied to reduce this problem, viz. by installing "discrete" capacities in the direct neighbourhood of the dampers. These may be e.g. specifically made flexible hoses and/or oil filled (e.g. steel, either or not spherical) chambers having a carefully chosen volume. In the latter case use is made of the compressibility of the included oil volume. Essential in this scope is that the resulting hydraulic rigidity characteristic, contrary to that of a gas sphere, has a linear character. Otherwise problems might occur with the actuation times of the anti-roll moment to be built up (when entering fast into a bend). As said, the capacities function as hydraulic buffers (comparable with the functionality of a conventional gas buffer from a damper) which are efficiently active especially at high frequent damper movements having small amplitudes. During implementation care should be take that the effective hydraulic rigidity on the high pressure side will not become too low. Otherwise danger arises that the maximum volume flow of the pump will not be sufficient to build up the anti-roll moment fast enough.
The working of this measure speaks for itself: all oil which cannot be sucked out of the hydraulic pipe system in time must be supplied by these hydraulic buffers. That way the risk for cavitation will be further reduced, even with tendentially too high pipe resistance. It may be clear that this measure will be more effective according as the installed hydraulic capacity is higher. As a particular favourable embodiment it is proposed to adapt the distribution of the various capacities in proportion of the corresponding piston surface. Thus the large chambers will need a relatively larger buffer volume. For the pressure actuation time only the totally installed rigidity is important.

Measure 5:

In the proposed solution according to measure 5 fast impressions of the damper will require a much less volume flow to be pushed through the damper valve of the large chamber. This makes it possible to apply valves having equal dimensions (e.g. identical construction). A more detailed observation on measure 5 can be found at the end of the discussion of exemplary embodiments of the invention.
Finally, for the critical failure behaviour of the damper forces measures 1 and 4 together are effective. Measure 1 is especially relevant for driving straight ahead. By the more stabile rest position of the 4/3 valve more advantage can be taken of the open "H" position with minimal resistance characteristics between the various channels. Any influence of the switching behaviour of the 4/3 valve to the occurring damper forces is excluded. By measure 4, especially during high frequent bumps (having small amplitudes) of the dampers, the (negative) influence of the resistances of the pipes, the various valves and the pump is, as it were, filtered away. What remains is the contribution of the damper valves to the damper characteristics. Those characteristics have to be dimensioned such that they supply sufficient damping to keep the wheels sufficiently pressed against the road surface ("road holding") when driving over e.g. a Belgian clinker road. Measure 4 is effective during driving straight on as well as in bends.

Exemplary embodiment

Figure 1 shows a prior art configuration; this figure has already been discussed in the foregoing.
Figure 2 shows the exemplary embodiment of the invention;
Figure 3 shows an exemplary embodiment of a 4/3 valve according to the invention;
Figure 4 shows the valve from figure 3 under dynamical conditions;
Figure 5 shows a force/way diagram of the movable switching element (the slide) of the valve from figure 3;
Figure 6 shows a detailed elaboration of the valve from figure 3;
Figure 7 shows various switching positions of the valve from figure 6;
Figure 8 schematically shows a complete vehicle system including valves shown in figure 3.

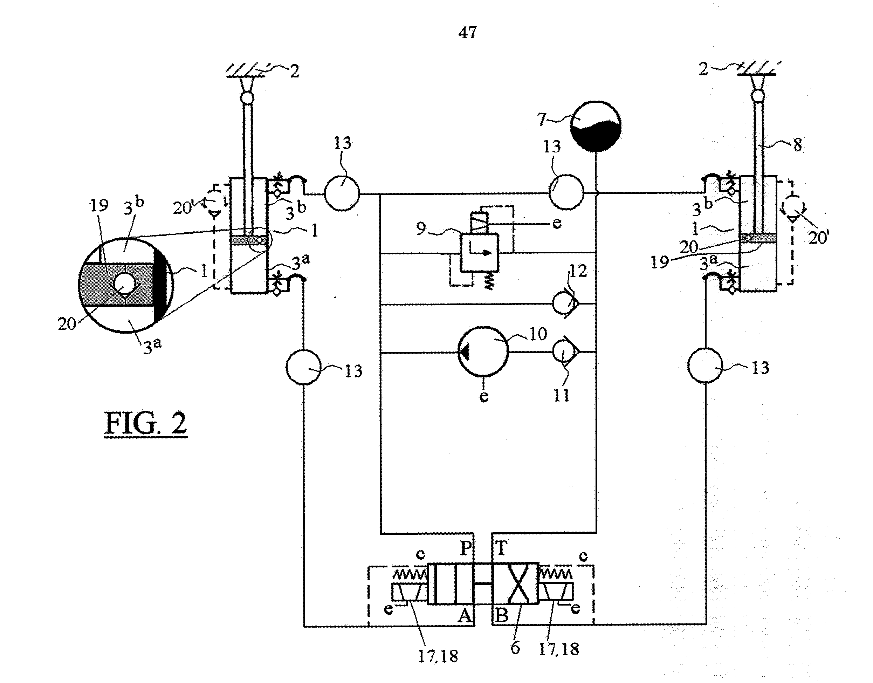

Figure 2 shows the exemplary embodiment of the invention. Like the prior art system shown in figure 1, the system shown in figure 2 comprises two hydraulic piston cylinder units 1, functioning as suspension damper/actuator modules for a vehicle 2, each having a first (large) cylinder chamber 3a and a second (small) cylinder chamber 3b and a piston rod 8 connected to the vehicle. The fundamental operation of the configuration which form the basis of both the prior art system and the system according to the present invention, has been disclosed in the earlier mentioned patent in the name of the inventor of the present application, EP1238834.

Like the prior art system the 4/3 valve 6 comprises two first switching ports P (connected to the pump) and T (connected to the gas accumulator/buffer tank) and two second switching ports called A and B (connected to the large damper chambers) which can be interconnected mutually in three ways: in the rest position ("H") P, T, A and B all are interconnected, in one extreme position ("II") P is connected to A and T to B, while in the other extreme position ("X") P is connected to B and T with A. The 4/3 valve is actuated hydraulically via control ports c which, unlike the prior art system, are connected directly to the AB ports. Moreover, the 4/3 valve in this new system is provided with an additional electromagnetic actuation 17 which, like the electrically actuatable pressure control valve 9 (roll valve) and the (electric) pump motor, has been connected to the "board computer" of the vehicle, indicated with "e".

The operation of this all has already been discussed extensively in the foregoing, while in the following especially the operation of the new 4/3 valve configuration will be discussed more in detail.

Differences with the prior art configurations shown in figure 1 and known from EP060761236 and EP1238834 are:

1. The control ports c of the 4/3 valve 6 are connected to the AB switching ports. Further, the slide which is movable via the control ports c and which can interconnect the AB and the PT ports in the H, II or X mode, is connected to an electromagnetic actuation e which is arranged (together with the hydraulic actuation via the control ports c) to move the slide from its rest position (H mode) into the direction of the one (II mode) or the other (X mode) extreme position.

2. A one-way valve 11 has been installed in the suction pipe of the pump 10.

3. A one-way valve 12 has been installed parallel to the roll valve (pressure control valve) 9.

4. Hydraulic buffers (capacities) 13 have been installed in the supply pipes of the dampers 1, e.g. in the form of hoses or chambers.

5. A one-way valve 20 has been installed in each damper 1, viz. in the relevant damper piston 19 (as an alternative a one-way valve may be installed in a circuit parallel to the relevant piston, i.e. in a connection pipe between both chambers of the same damper, which alternative has been indicated by broken lines).

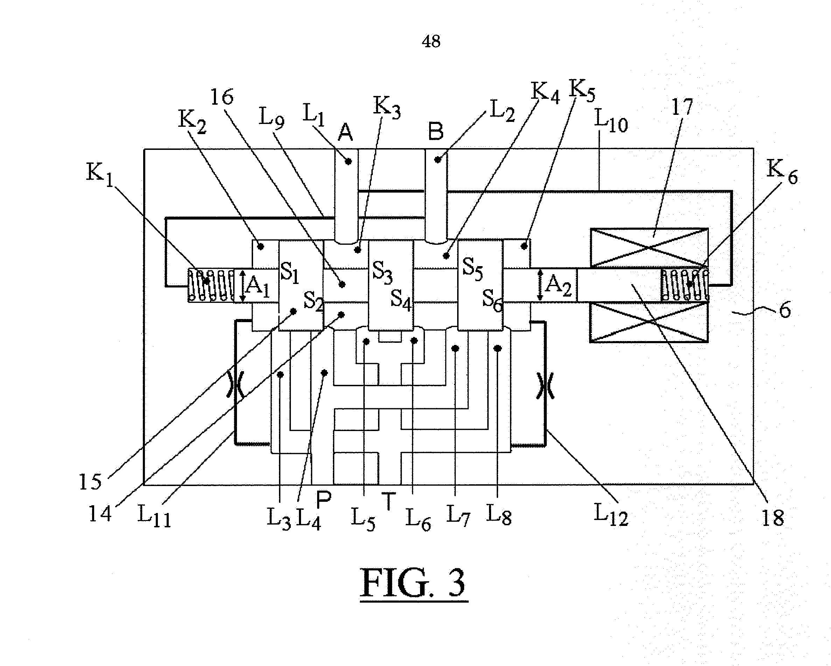

A constructive embodiment and the working of the new 4/3 valve will be discussed now with reference to figure 3. Figure 3 shows an example of a possible implementation of the new 4/3 valve having a hydraulic actuation and double acting electromagnet, drawn in the neutral rest position.

The proper valve has been accommodated in a housing but may also be implemented as a "cartridge". Several channels or pipes are within this housing, viz.:

- $L_1$: connection between connection port A and chamber $K_3$;
- $L_2$: connection between connection port B and chamber $K_4$;
- $L_3$: connection between connection port T and chamber $K_2$;
- $L_4$: connection between connection port P and chamber $K_3$;
- $L_5$: connection between connection port T and chamber $K_3$;
- $L_6$: connection between connection port T and chamber $K_4$;
- $L_7$: connection between connection port P and chamber $K_4$;
- $L_8$: connection between connection port T and chamber $K_5$;
- $L_9$: connection between connection port B and chamber $K_1$;
- $L_{10}$: connection between connection port A and chamber $K_6$;
- $L_{11}$: connection between connection port T and chamber $K_2$;
- $L_{12}$: connection between connection port T and chamber $K_6$;

A cylindrical shaft 14 has been bored in the housing (or cartridge) 6. A large central, cylindrical slide 15 has been placed in the shaft. This slide has been constricted (narrowed) at four places. Due to this interspaces 16 are realized, interconnecting a number of the mentioned channels. Those interspaces will be indicated here as chambers. The cylindrical shaft has two further drills at each end e.g. having a smaller diameter, in which the constricted end of the cylindrical slide has been installed. The following chambers can be defined:

$K_1$: chamber connected to pipe $L_9$;
$K_2$: chamber connected to pipes $L_{11}$ and $L_3$;

$K_3$: chamber connected to pipes $L_1$, $L_4$ and $L_5$;
$K_4$: chamber connected to pipes $L_2$, $L_6$ and $L_7$;
$K_5$: chamber connected to pipes $L_8$ and $L_{12}$;
$K_6$: chamber connected to pipe $L_{10}$.

By the four constrictions of the central cylindrical slide three areas remain in which the slide maintains its original large diameter. This system might be characterized as three identical pistons equidistantly coupled to one central shaft. Each piston has two sharp edges at is ends, called "control edges" or "Steuerkanten" (in German). With these the flow openings to the individual chambers can be varied in various channels. The following six "Steuerkanten" can be identified:

$S_1$: "Steuerkante" which varies the flow section of pipe $L_3$ to chamber $K_2$;
$S_2$: "Steuerkante" which varies the flow section of pipe $L_4$ to chamber $K_3$;
$S_3$: "Steuerkante" which varies the flow section of pipe $L_5$ to chamber $K_3$;
$S_4$: "Steuerkante" which varies the flow section of pipe $L_6$ to chamber $K_4$;
$S_5$: "Steuerkante" which varies the flow section of pipe $L_7$ to chamber $K_4$;
$S_6$: "Steuerkante" which varies the flow section of pipe $L_8$ to chamber $K_5$.

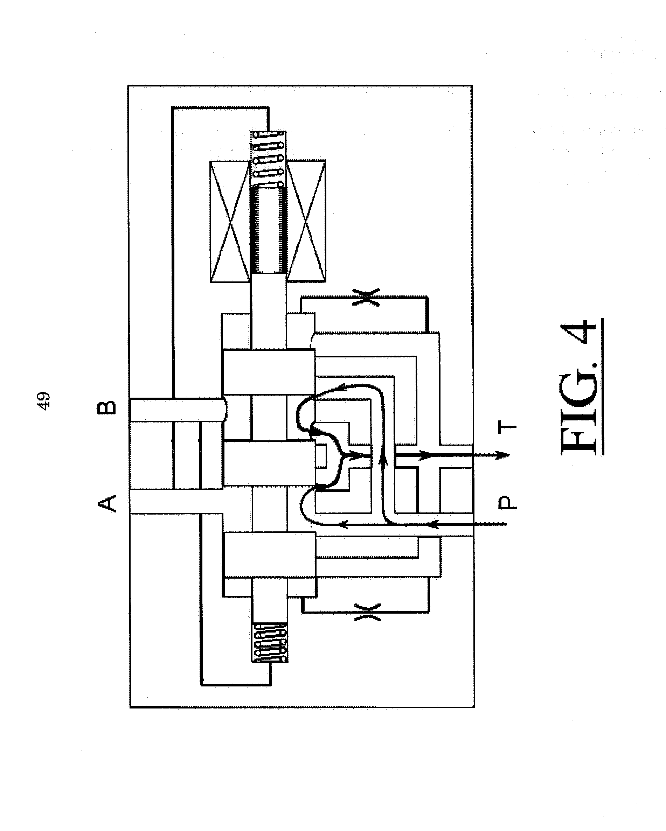

Because the pistons have been coupled to one shaft, during a slide movement to the left the "Steuerkanten" having odd numbers will decrease the corresponding flow sections while the "Steuerkanten" having even numbers will increase them. This situation has been shown in figure 4 as an example. As a very favourable embodiment it can be mentioned that when the slide is in its neutral rest position, the openings of the channels $L_4$, $L_5$, $L_6$ and $L_7$ are half closed. The corresponding "Steuerkanten" S2, S3, S4 and S5 in fact are "actuators", realizing the three different switching conditions of the 4/3 valve (H, II or X position; see figure 2), viz.:

"II" position: slide completely to the left, flows to $L_5$ and $L_7$ are closed;
"H" position: slide in rest position, all relevant pipes $L_1$, $L_2$, $L_4$, $L_5$, $L_6$ and $L_7$ are in free connection to each other;
"X" position: slide completely to the left, flows to $L_4$ and $L_6$ are closed.

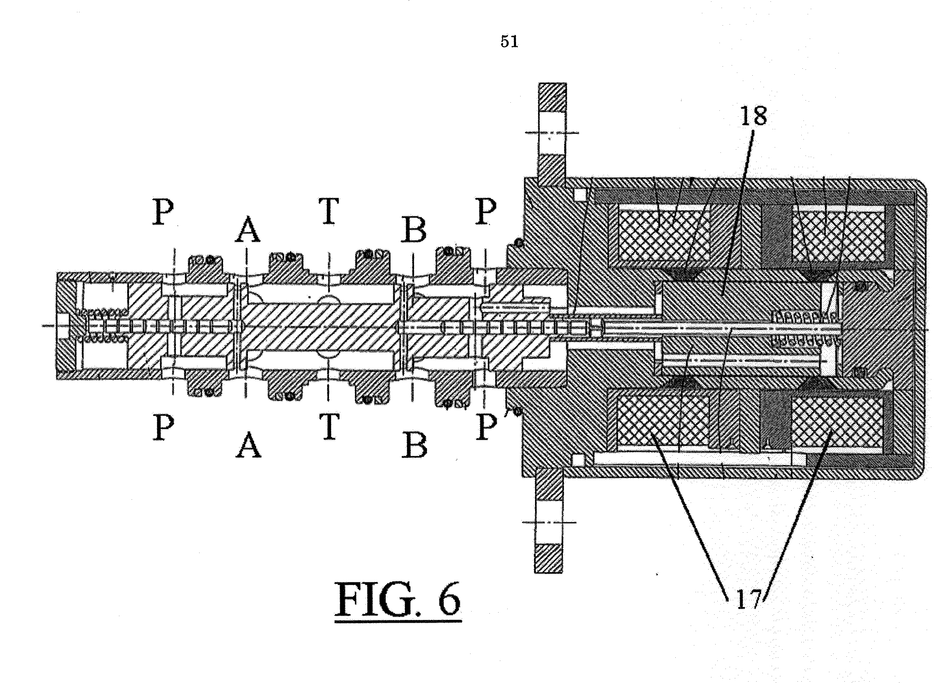

The remaining two "Steuerkanten" $S_1$ and $S_6$ are less relevant for the invention, but may be used to achieve position dependent slide damping. During e.g. a fast movement to the left chamber $K_2$ will increase and chamber $K_5$ will decrease. Due to this fluid has to be pressed away over the pipes $L_{11}$ and $L_3$ and sucked over the pipes $L_8$ and $L_{12}$. At a fast slalom drive of the vehicle it is important that the slide can be switched fast from the left to the right and vice versa. A heavy damping of the slide in its rest position thus could be disturbing. Too little damping, however, could cause acoustical problems if the slide bumps mainly unbuffered to its end stops. Because during a fast movement to the left pipe $L_3$ will be closed prematurely, the slide can be slowed down by the heavy rest damping generated by the ("tuned") resistance of pipe $L_{11}$. A similar mechanism applies for a fast movement to the right. However, damping chamber $K_5$ is involved then.
Herewith the most important geometry of the slide has been described. Only the chambers $K_1$ and $K_6$ have not been discussed until now. These chambers are used to apply the control pressure (= pressure difference of the connection ports A and B) to the slide in its motion direction. This pressure (i.e. the hydraulic oil) is led to these chambers via the pipes $L_9$ and $L_{10}$. The pressure acts upon the surfaces $A_1$ and $A_2$ ("Druckmeldeflächen") which preferably are equal. In the proposed implementation of figure 3 these chambers are also used to accommodate the reset springs (taken strictly this is not necessary, e.g. see the variant of figure 6). As mentioned, these work in opposite direction. Each spring has a certain pretension but because they work in opposite direction, in the central rest position no resulting force works to the slide. The advantage of this implementation is that both springs always are loaded under a certain pressure, which simplifies the construction of the suspension of the springs. The stability of the rest position will be determined now by the total effective spring rigidity of the complete spring packet (in this case the sum of the spring rigidities of spring, and spring$_2$).
Finally the function and working of the electromagnet has to be discussed, consisting, in its most simple form, of a coil 17 and a core 18. This electromagnet is provided so that it can (as a function of the current flowing through the coil) exert a force to the slide in the relevant motion direction of the slide. In figure 3 this is a so-called double acting electromagnet, which is able to pull and to push. In the configuration of figure 3 this is achieved in that the core 18 is a permanent magnet of which in one current direction the permanent magnet field has the same direction as the magnet field generated by the coil, while in the other current direction both magnet field directions are opposite. Consequently, in the one case the core 18 will be pulled (more) inside the coil 17 and in the other case pushed outside the coil.
In the implementation according to figure 6 one core and two separate coils are used, one coil to pull and one coil to push.
The further operation of the new 4/3 valve will be elucidated now with the help of figure 4. In this figure the slide 6 has been drawn in a position in which it has been actuated something to the left (thus still not being in the extreme position, the "II" position in this case). Further, with the help of flow lines the trajectory of an oil flow has been drawn as typically could be caused by the pump from P to T (if started by the control command "e" of the board computer). Here a typical situation is considered in which the vehicle changes from driving straight ahead to taking a bend. Thus it will be desirable that the pump becomes on power (to be able to build op pressure) and that the 4/3 valve is switched from its rest position into one of its extreme positions.

In this case the force of the electromagnet $F_{solenoid}$ and that of the hydraulic pressure on the slide $F_{pressure}$ work into the same direction and mainly make an equilibrium with the forces from the spring packet $F_{spring}$ (neglecting the occurring flow, friction, damping and acceleration forces). The following force equilibrium applies:

$$F_{solenoid} + F_{pressure} = F_{spring}$$

The magnitude of the resulting pressure force working on the slide is determined by next equation:

$$F_{pressure} = p_A \cdot A_1 - p_B \cdot A_2$$

in which the variables $p_A$ and $p_B$ are the pressures acting at the ports A and B respectively. For the rest the slide is "druckausgeglichen" i.e. (seen quasi-stationary) the pressures in damping chambers $K_2$ and $K_5$ are equal to each other (equal to the pressure in connection T) and work to an equally large surface; to be precise, the ring surface of the two outer pistons originated as a result of the constrictions at the end of the cylindrical slide. Besides, these pressure forces work in opposite direction and thus neutralize each other.

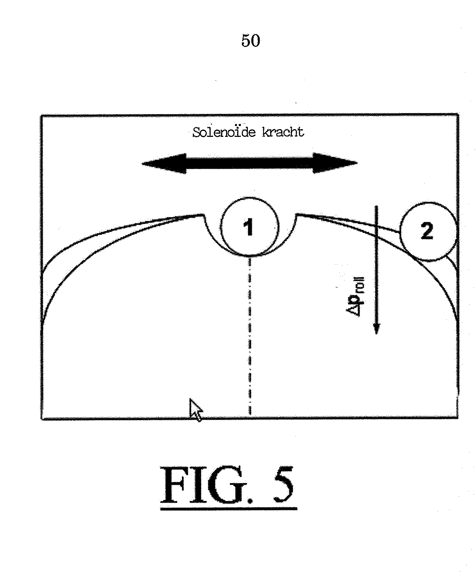

Due to the large effective flow section from P to T in the central rest position, the hydraulic pressure force $F_{pressure}$ will be negligibly small in the beginning. Due to the small distorsion of the spring packet the force $F_{spring}$ will be negligible as well. Due to this the electromagnet will not have any trouble to give the slide a push out of the centre. If the movement has been started, the effective flow openings from P to T (in this case the openings corresponding to the "Steuerkanten" $S_3$ and $S_5$) will become smaller. Due to the increased resistance over these constrictions the pumping pressure from P to T (and consequently from A to B due to the decoupled connections coming into being) can be built up. With this the term $F_{pressure}$ in the above equation gains influence and starts pushing against the force of the springs together with the electromagnet. As soon as a certain position has been passed by (the stable central position is left) even a (desirable) instable switching movement towards the extreme position starts: the further the slide moves to the left the larger the resistance from P to T, the larger the pumping pressure and the larger the supporting force $F_{pressure}$. This hydraulic pressure amplification thus has the character of a so-called "negative spring rigidity" which, seen mathematically, is an instable term. After all, nowhere any stationary equilibrium can be found between the force of the spring packet and that of the hydraulic actuation pressure: the slide only will come to standstill against its firm end stop. This procedure will be elucidated with the graphical representation of figure 5.

In figure 5 a "ball" indicates the position of the slide. Position 1 corresponds to the rest position ("H" position) and position 2 to one of the two extreme positions ("II" or "X" position). The vertical arrow indicates the influence of the pumping pressure dependent force (plus the force of the springs) to the slide movement, which - see figure 5 - can be represented as a gravitation field exerted to the ball lying in a "hole" upon a (curve) mountain. In fact the force is the sum of the suspension force $F_{spring}$ and the pressure force $F_{pressure}$. The hydraulic pressure force in the centre, as explained earlier, is negligibly small and the stable rest position is obtained on the basis of the implemented spring characteristic (having a positive spring rigidity). This has been represented in figure 5, showing the (stable) hole on top of the curve. The slide movement will become instable as soon as the ball (thus the slide) is pushed out by the electromagnetic force. The gradient of the curve is determined by the magnitude of the pumping pressure and the position of the slide out of the centre. Thus the pressure amplification (and thus the gradient) is larger according as the slide has moved further out of its rest position, the pump runs faster and the pressure control valve (roll valve) is more pinched. The slide can be pushed back to the rest position by cutting down the pumping pressure in an actively controlled way. Primarily this is determined by the setpoint at the pressure control valve (which thus has to open); slowing down the rotation speed of the pump may be helpful as well. As soon as the pumping pressure has come below a certain threshold, the remaining force of the reset springs will be sufficient - after the magnetic force has been taken away - to push the slide to its rest position. For the graphical representation in figure 5 it means that the curve mountain will change into a wide hole and the ball will roll back to the centre by itself.

Figure 6 shows a detailed elaboration of a valve known from DE102004017088 in the name of HYDAC, which valve, however, is connected at an alternative way ("inversely").

As appears from DE102004017088, the known valve is intended to be applied as an electrically actuatable (by an electromagnet system) double acting proportional pressure limiting valve controlling (in a stable way) the consumer pressures in the connection ports A and B. For this application it is necessary that the high pressure side of the pump (P) is connected to the central port of the valve and the low pressure side, usually the tank pressure (T), is connected to the two outer ports ($T_1$ and $T_2$ in the patent). Surprisingly it appears that by substitution (replacement) of the input connection ports P/T, normally to be connected to the pump (P) and tank (T), by the output connection ports A/B, intended as consumer ports, in fact the functionality of the 4/3 switch valve according to the present invention is realized.

In figure 6 the valve has been drawn in its neutral rest position. Contrary to the embodiment of figure 3, the flow openings to the consumer ports A and B are varied now by means of the "Steuerkanten" $S_2$, $S_3$, $S_4$ and $S_5$ shown in figure 6. By making the piston height smaller than the width of the openings of the port the left and right side of the piston can be used as "Steuerkante" for one port, which reduces the number of channels to be drilled into the corresponding valve block.

A further difference with the exemplary embodiment of figure 3 concerns the embodiment and location of the "Druckmeldeflächen". This is solved by the system known from DE102004017088 with extra concentric bores made axially left and right in the central slide. The oil is guided to the two pressures chambers via radial bores in the pistons provided with the "Steuerkanten". By connecting the valve the other way round, both damper chambers $K_2$ and $K_5$ as well as the room around the electromagnet are in connection with the high pressure side (P) of the pump. This is no problem because also in this case the valve, except the rooms of the pressure chambers, is "druckausgeglichen" and due to that in principle the same force equilibrium equation applies as indicated at figure 4.

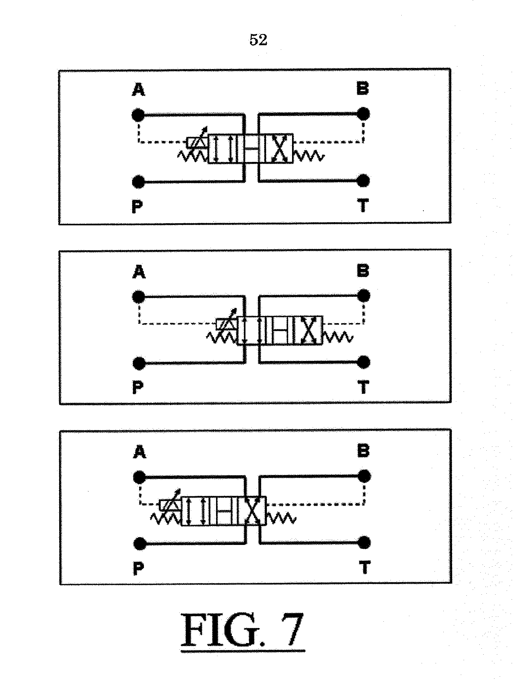

For a description of the switching mechanism figure 7 has been added. Here the valve has been drawn in its three switching conditions. For the sake of clarity the electromagnet has been omitted. Also the state of the hydraulic symbol has been indicated.

In the central rest position all connection ports P, T, A and B are interconnected. The individual flow openings are so large that a volume flow from P to T will cause no or hardly any pressure difference. This pressure difference exerts a force on the slide, via the ports A and B, in the direction of the slide movement. The effective rigidity of the two reset springs is high enough to restrict the corresponding movement (caused by pressure bumps) to a negligibly small area around the rest position.

To move the slide away from its rest position the pump will be switched on and the electromagnet will actuate the slide e.g. to the right. Due to the initiated movement the flow openings from A to T and from P to B will become smaller and an (increasing) pressure difference from A to B will come into being automatically (after all, A is relatively more in connection with P and B with T). Soon the pressure actuation will be sufficiently large to push the slide completely into its extreme position. Now A is completely connected to P and the connection from A to T has completely closed. The same applies for port B, but then vice versa. This position has been drawn in the central row of figure 7. The same observation can be given for the left position of the slide.

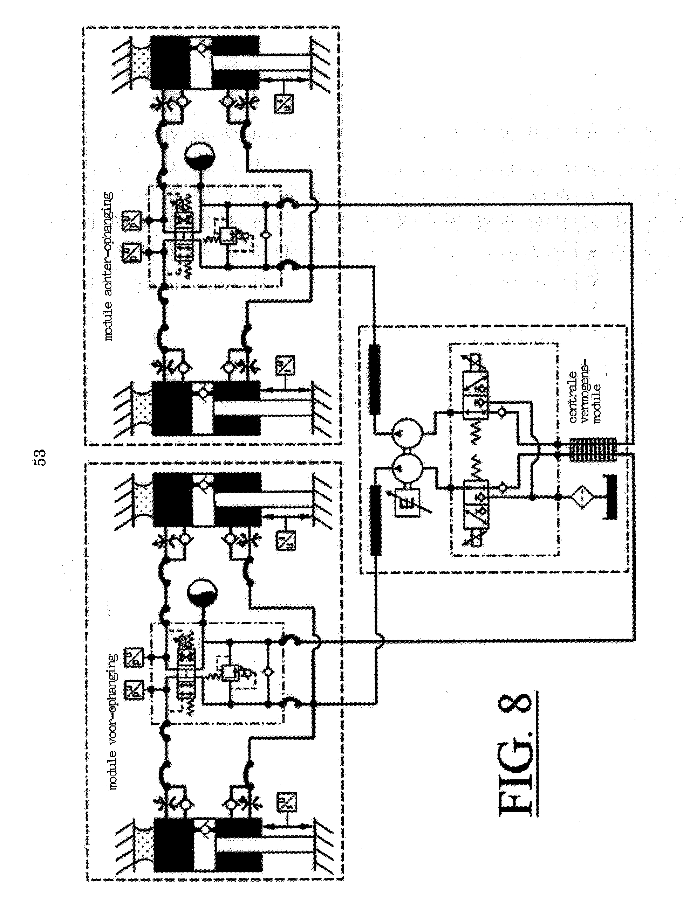

Figure 8 schematically shows a complete vehicle system including valves as shown in figure 3.

In an anti-roll system it is desirable that the anti-roll moments can be distributed actively (and independently) over both vehicle axles. Thus, in view of agility (manoeuvrability) it is desirable that relatively much of the total anti-roll moment is supported upon the rear axle. Often this setting is chosen at a low driving speed. However, this moment distribution at high driving speeds may lead to badly dampened steering response (oversteering) which affects the driving security. Therefore at high vehicle speeds the anti-roll system of the front axle will supply relatively much moment resulting in a stable yaw response of the vehicle to fast steering movements (understeering). In order to realize these independent anti-roll moments both systems have to be hydraulically separated. In a system of the present art this may be solved as a very reasonable embodiment by applying a so-called tandem pump. This includes that two hydraulic pumps are coupled to one common axle and thus are commonly driven by one electromotor, as shown in figure 8.

An important advantage of the modular configuration of the system is that the central power module can be accommodated everywhere in the vehicle (package advantage). Preferably it will be accommodated in the rear of the vehicle, which is favourable for the weight distribution of the vehicle.

The complete vehicle system thus includes three hydraulic modules, viz.:

- a "front suspension module", comprising a valve block having a 4/3 direction valve, a pressure control valve, a one-way valve, a gas accumulator and two pressure sensors. Further two dampers each having two controllable external damper valves and a level sensor for the height regulation. The whole is interconnected by a hydraulic pipe network as desirable with VDS/Tech and already described earlier;

- a "rear suspension module" having the same configuration;

- a "central power module", comprising a valve block having two 3/2 valves (for height regulation by means of pressure regulation in the gas accumulators, actuated electromagnetically, seat valves preventing leakage to the tank) and two one-way valves (for fail-safe).

Further, a common cooler has been installed in the closed circuit in the pump suction pipe (enabling heat exchange between the front and rear axle) and specifically tuned flexible hoses have been installed in the pressure pipes improving the acoustics (damping pulsation of the pump). Further a filter and an oil buffer has been installed.

Further it may be preferred to install the dampers inversely, i.e. the housing is connected to the vehicle body (via a rubber element for isolating high frequent resonances) and the piston bar to the wheels. The advantage of this is that the hydraulic hoses connected to the housing, as well as the electric cables connected to the damper valves need to make less large movements during suspension movements. Inverse installation of normal dampers often will not be allowed because the gas medium (of the integrated accumulator) is not separated from the oil medium. Due to the membrane accumulator (and its location in the hydraulic system) in a system of the present art this will give not any problem.

In principle, the pipes of the central power module may be long and thin. After all, these pipes play no important role in optimalization of the driving comfort. Volume flows (or pressure pulsations) originated by damper movements when driving over road bumps, after all, will only be pumped back and forth in both suspension modules. These pipes and corresponding valve system thus need to be dimensioned having low resistance (large diameters, short lenghts, few bends, etc.).

By applying pressure sensors at the A and B ports of the 4/3 valve not only the pressure can be controlled in a robust way (by means of the board computer), but the condition of the direction valve can be checked as well. The latter is important for the functionality of the fail-safe logics. In this way a serious system error (viz. building up the anti-roll moment into the wrong direction) would be detected.

Finally, the operation of the preferred measure 5, i.e. installing a one-way valve 20 into the pistons 19 or, as an alternative, a one-way valve 20' into a pipe between the chambers 3a and 3b, will be discussed more extensively in comparison with the configuration known as such from EP1238834.

For reaching the desirable pressure characteristics a problem may be noticed relating to "softening" the damper forces during fast pushes. A mathematical treatment on the basis of linearized resistances of the damper valves may make this plausible. Next parameters apply:

$A_1$: Cross-section of the piston (= $0.25 \times \pi \times (d_1)^2$)
$A_2$: Cross-section of the ring surface of the piston (= $0.25 \times \pi \times ((d_1)^2 - (d_2)^2)$)
$R_1$: Resistance of the damper valve of the large chamber
$R_2$: Resistance of the damper valve of the small chamber

In the case of the configuration known from EP1238834, where damper valves have been installed in the supply pipes to the damper chambers and wherein (as evident from e.g. the claims) no substantial hydraulic connection exist between the chambers of the same damper, the damper forces would be set as follows:

$$ F_{bump} = R_1 \cdot A_1^2 \cdot v_{bump} = k_{bump} \cdot v_{bump} $$

$$ F_{rebound} = R_2 \cdot A_2^2 \cdot v_{rebound} = k_{rebound} \cdot v_{rebound} $$

Linear resistances $R_i$ are presumed. In practice this often will not be the case and a degressive shape will be aimed at by means of spring actuated damper valves. Further, in the previous formulas it applies that during suction movements over the valve towards the chamber, the parallel one-way valve opens and the oil can be sucked out of the system almost without any resistance. In this treatment, for the sake of simplicity, the influence of the resistance of the pipes and the central valve system will be presumed to be negligibly small. $F_i$ is the force exerted to the piston rod and $v_i$ is the piston speed relative to the damper housing (the indices bump and rebound depend on the direction of the movement).

The advantage of this embodiment is that the damper characteristics, indicated here with damper constants ki (in this case, after all, it concerns linear characteristics), can be actuated independently for the push and pull characteristics ("bump" and "rebound") by a univocal variation of the corresponding $R_i$. The resistance of the "bump valve" thus cannot influence the "rebound characteristic" and vice versa.

In practice it is often desirable that the push characteristic is not larger than the pull characteristic, often even a fraction of it (1:2 or even 1:3) because during driving over a bulge in the road an upward bump will be experienced by men much more irritating than a downward jerk (which, moreover, only will occur to a restricted extent, viz. limited by the acceleration of the gravitation). However, with the configuration known from EP1238834 it is very difficult to comply with this desirable embodiment. This may be clarified by next discussion. In the EP1238834 configuration it is preferred that the piston surface area is twice as large as the ring surface area:

$$A_1 = 2 \cdot A_2$$

If this relation is filled in into the equation of the damper forces, then applies:

$$F_{bump} = 4 \cdot R_1 \cdot A_2^2 \cdot v_{bump} = k_{bump} \cdot v_{bump}$$
$$F_{rebound} = R_2 \cdot A_2^2 \cdot v_{rebound} = k_{rebound} \cdot v_{rebound} \qquad \Leftrightarrow \qquad \frac{k_{bump}}{k_{rebound}} = 4 \cdot \frac{R_1}{R_2}$$

From this formula it appears that the resistance of the damper valve of the large chamber 3a has to four times lower than that of the small chamber 3b to provide that the (lowest) bump characteristic produces just as much damping as the (lowest) rebound characteristic. After all, relatively twice as much volume flow must be let through and only the half of the pressure to the piston surface is allowed to act in order to generate the same force upon the piston bar (comparison of pulling and pushing). All this will result in an extraproportional large flow opening of the relevant valve (still worsened by the non-linear relation between the resistance of a hole and its flow opening according to Bernoulli's law). It will be still worse if the bump characteristic has to be designed smaller than the rebound characteristic. It may be clear that this, due to the available room but also due to the complexity of adjustable damper valves, will not always be possible.

In the proposed solution according to measure 5 fast impressions of the damper will require a much less volume flow to be pushed through the damper valve of the large chamber. This makes it possible to apply valves having equal dimensions (e.g. identical construction). For the new invention a similar mathematical treatment may be presented:

$$F_{bump} = \frac{R_1 \cdot R_2}{R_1 + R_2} \cdot A_2^2 \cdot v_{bump} = k_{bump} \cdot v_{bump}$$
$$F_{rebound} = R_2 \cdot A_2^2 \cdot v_{rebound} = k_{rebound} \cdot v_{rebound} \qquad \Leftrightarrow \qquad \frac{k_{bump}}{k_{rebound}} = \frac{R_1}{R_1 + R_2}$$

From these formulas it appears that the bump damping is always smaller than or equal to the rebound damping, even if the valve of the large chamber 3a is closed completely. In this special case the bump damping is equal to the rebound damping. During pull movements all volume flow will be impelled from the ring surface through the rebound valve (the large chamber can suck on without any problem via the one-way valve parallel to $R_1$). However, this needs to be large enough to permit the large (sucking) volume flow without cavitation; the one-way valve in the piston opens during pressure movements causing that the oil can escape via this valve and the resistance $R_2$ to the pipes. The pressures above and below the valve are equal now. Because the piston surface is twice as large as the bar surface, a corresponding pressure force will originate to the bar.

If the valves are equal (viz. set to equal resistance) this will cause a favourable embodiment for automotive purposes wherein the bump characteristics are a factor two smaller than the rebound characteristics (the repulsed oil under the piston rod can escape to the pipes via two outlets, viz. the bump and the rebound damper valves).

A possible restriction of the preferred measure 5 may be that the bump characteristic can no longer be actuated independently of the rebound characteristic, which could limit the achievements of the controllable damper system. This could (partly) be compensated by providing the one-way valve of the piston with a certain resistance characteristic (in opened state). Due to this the pressure in the large chamber can become larger than that in the small chamber, which increases the achievable distribution of the push characteristics relative to the pull characteristics.

Besides, the good operation of the anti-roll stabilisation known as such from EP1238834 remains unaffected: the extra one-way valves will only open there where admitted w.r.t. the operation (presumed to be well-known). During taking a bend the pump will begin to run and the pressure will be adjusted by means of the roll valve, causing that the car will be held upright. The chambers of the dampers of the outer wheels will be charged with equal pressure. In this case it will thus not make any difference whether the one-way valves in the pistons are opened or closed. However, on the side of the inner wheels the small chamber 3b will be charged with the high pressure of the pump and the large chamber 3a with that of the gas accumulator 7. Due to this pressure difference this one-way valve 20 (20') thus will close, which is desirable to discharge all pump volume flow via the roll valve to the low pressure side. Even if the one-way valve would not close completely but would have a specifically designed rest opening which is small enough to discharge part of the pump volume flow over the roll valve, the anti-roll mechanism known from EP1238834 would still be able to work.

**Claims**

1. Suspension system for a vehicle, comprising a hydraulic pump (10) and at least two hydraulic piston-cylinder units (1) which serve as spring damper/actuator modules and which each comprise a larger, first cylinder chamber (3a) and a smaller, second cylinder chamber (3b) and which are connected to a roll control system which comprises a 4/3 valve (6) provided with hydraulic control ports (c), having two first switching ports (P,T) which are communicatively connected to both sides of the hydraulic pump, and two second switching ports (A,B) which are communicatively connected to both first cylinder chambers (3a), which switching ports are mutually connectable by means of a movable connection member which can take a rest position and under dynamic conditions of the vehicle, under control of e.g. a vehicle computer system, can be brought out of its rest position, wherein in the rest position of the connection member ("H") the first and the second switching ports (P,T and A,B respectively) are all interconnected (P-T-A-B), in one extreme position ("II") the first switching ports are interconnected with the corresponding second switching ports (P-A; T-B) and in the other extreme position ("X") the first switching ports are interconnected with the mutually substituted second switching ports (P-B; T-A), **characterized in that**

   - the hydraulic control ports (c) of the 4/3 valve (6) for controlling the movable connection member each are communicatively connected with the second switching ports (A,B);
   - the movable connection member (15,16) is connected to a double acting electromagnetic actuation (17,18) which is arranged to move the movable connection member under control of an electric control current (e), from its rest position into the direction of the one or the other extreme position.

2. Suspension system according to claim 1, wherein the hydraulic pump (10) is connected via a high pressure connection and a low pressure connection, **characterized by** a one-way valve (11) in the low pressure connection of the pump.

3. Suspension system according to claim 1 or 2, comprising a pressure control valve parallel to the hydraulic pump (10), **characterized by** a one-way valve (12) parallel to the pressure control valve.

4. Suspension system according to any of the preceding claims, **characterized by** hydraulic buffers (13) in supply pipes of the first and/or second cylinder chambers (3a,3b).

5. Suspension system according to any of the preceding claims, **characterized by** a one-way valve (20, 20') between the first and the second cylinder chamber (3a,3b) of each of the dampers (1).

6. Suspension system according to claim 5, wherein the one-way valve (20) is in the piston (19) of the relevant damper (1).

7. Suspension system according to claim 5, wherein the one-way valve (20') is in a connection between the first and the second cylinder chamber (3a,3b) of the relevant damper (1).

8. Suspension system according to claim 1, wherein as the said 4/3 valve (6) a valve (fig. 6) is used which is known as such for the application as an electrically actuatable, double acting proportional pressure limiting valve, which valve comprises a double acting electromagnetic actuation and a movable connection member; wherein, however, the connection ports which in the known application are to be connected to a hydraulic pump (P/T), are substituted by the connection ports which in the known application are to be connected as connection ports intended as consumer ports (A/B), due to which those connection ports (P/T) of the valve known as such which are, in the known application, to be connected to pump and tank, when applied in the suspension system according to claim 1, operate as said second switching ports (A/B), while the connection ports intended, in the known application, as consumer ports (A/B), when applied in the suspension system according to claim 1, operate as said first switching ports (P/T);
wherein the double acting electromagnetic actuation of the valve known as such is arranged to move the movable connection member, under influence of the electric control current (e), from its rest position into the direction of the one or the other extreme position.

9. Vehicle, comprising at least two suspension systems according to any of the preceding claims, wherein the two or more suspension systems are hydraulically separated and an own hydraulic pump is used for each suspension system, wherein, however, those two or more hydraulic pumps are driven by one common electromotor.

Prior art

FIG. 1

EP 2 000 336 A1

**FIG. 2**

**FIG. 3**

**FIG. 4**

**FIG. 5**

EP 2 000 336 A1

**FIG. 6**

52

FIG. 7

53

module achter-ophanging

module voor-ophanging

centrale vermogens-module

## FIG. 8

**European Patent Office**

## EUROPEAN SEARCH REPORT

Application Number

EP 07 10 9820

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 1 238 834 A (BAYERISCHE MOTOREN WERKE AG [DE]) 11 September 2002 (2002-09-11) * the whole document * | 1 | INV. B60G17/0185 B60G17/056 B60G21/073 |
| A,D | DE 10 2004 017088 A1 (HYDAC ELECTRONIC GMBH [DE]) 27 October 2005 (2005-10-27) * the whole document * | 1,8 | B60G21/10 F15B13/04 |
| A | EP 1 342 597 A (VOLKSWAGEN AG [DE]) 10 September 2003 (2003-09-10) * the whole document * | 1,8 | ADD. B60G17/033 B60G17/016 |
| A | GB 942 666 A (THOMPSON RAMO WOOLDRIDGE INC) 27 November 1963 (1963-11-27) * figure 4 * | 1,8 | |
| A | DE 195 21 746 A1 (BAYERISCHE MOTOREN WERKE AG [DE]; INGENIEURGEMEINSCHAFT PROF DR [DE]) 19 December 1996 (1996-12-19) * figures * | 1,9 | |
| A | DE 102 16 132 A1 (BAYERISCHE MOTOREN WERKE AG [DE]) 23 October 2003 (2003-10-23) * figures * | 1 | TECHNICAL FIELDS SEARCHED (IPC) B60G F15B |
| A | DE 196 49 187 A1 (BAYERISCHE MOTOREN WERKE AG [DE]) 28 May 1998 (1998-05-28) * figures * | 1 | |
| A | DE 102 52 190 A1 (ZAHNRADFABRIK FRIEDRICHSHAFEN [DE]) 27 May 2004 (2004-05-27) * figure 3 * | 1 | |
| A | WO 92/00203 A (ZAHNRADFABRIK FRIEDRICHSHAFEN [DE]) 9 January 1992 (1992-01-09) * figure 1 * | 1 | |

The present search report has been drawn up for all claims

| Place of search | Date of completion of the search | Examiner |
|---|---|---|
| The Hague | 29 November 2007 | Tsitsilonis, Lucas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 10 9820

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2007

| Patent document cited in search report | | | Publication date | Patent family member(s) | | Publication date |
|---|---|---|---|---|---|---|
| EP 1238834 | A | | 11-09-2002 | DE | 10111551 A1 | 12-09-2002 |
| DE 102004017088 | A1 | | 27-10-2005 | NONE | | |
| EP 1342597 | A | | 10-09-2003 | AT | 354486 T | 15-03-2007 |
| | | | | DE | 10210306 A1 | 18-09-2003 |
| GB 942666 | A | | 27-11-1963 | NONE | | |
| DE 19521746 | A1 | | 19-12-1996 | NONE | | |
| DE 10216132 | A1 | | 23-10-2003 | NONE | | |
| DE 19649187 | A1 | | 28-05-1998 | NONE | | |
| DE 10252190 | A1 | | 27-05-2004 | NONE | | |
| WO 9200203 | A | | 09-01-1992 | DE | 4120758 A1 | 02-01-1992 |
| | | | | EP | 0535116 A1 | 07-04-1993 |
| | | | | JP | 5507664 T | 04-11-1993 |
| | | | | US | 5338010 A | 16-08-1994 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 060761236 A
- EP 1238834 A
- DE 102004017088